# EUROPEAN PATENT APPLICATION

(11) **EP 1 641 229 A1**
(43) Date of publication of application: **29.03.2006**
(21) Application number: 05255767.5
(22) Date of filing: 16.09.2005
(51) Int. Cl.: H04M 3/487

(54) **Context driven advertising during a dialog**

(30) Priority: 27.09.2004 US 950984
(71) Applicant: Avaya Technology Corp., Basking Ridge, New Jersey 07920-2332 (US)
(72) Inventor: Erhart, George William, Loveland Colorado 80538 (US); Skiba, David Joseph, Golden Colorado 80403 (US); Matula, Valentine C., Granville Ohio 43023 (US)
(74) Representative: Williams, David John

(57) **Abstract**

A method and apparatus that enable the delivery of relevant content to a telecommunications user engaged in a call are disclosed. In the illustrative embodiment content is selected based on dialog of the call (e.g., speech text, etc.), and optionally, one or both of: (i) the state of the call (*e*.*g*., on-hold, transferring to another line, engaged in conversation, etc.), and (ii) the state of the conversation (e.g., greeting, data entry [such as keying in a PIN], adjournment, *etc*.). Content might also be based on one or more of the following: the identity of the user; the identity of other users involved in the call; the telecommunications terminal employed by the user for the call; other telecommunications terminals involved in the call; the date and time; the location of the user; and the location of other users involved in the call.

## Description

### Field of the Invention

The present invention relates to telecommunications in general, and, more particularly, to a technique for delivering content to a telecommunications terminal user based on dialog during a call.

### Background of the Invention

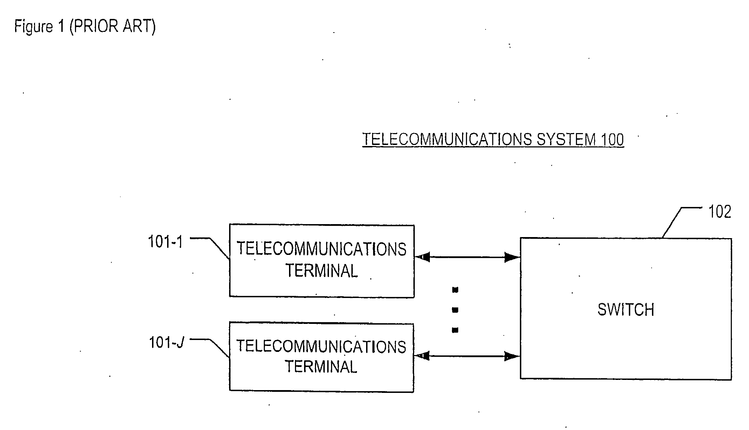

Figure 1 depicts telecommunications system 100 in the prior art. Telecommunications system 100 comprises telecommunications terminals 101-1 through 101-J, wherein J is a positive integer, and switch 102, interconnected as shown.

Switch 102 enables two or more telecommunications terminals 101 to communicate with each other by connecting (e.g., electrically, optically, etc.) a telecommunications terminal to another telecommunications terminal and by passing signals between the telecommunications terminals.

Telecommunications terminals *101-j,* for *j*=1 through J, are capable of placing calls to and receiving calls from one or more other terminals 101. In addition, each telecommunications terminal *101-j* is capable of communicating via one or more *modes of communication (e.g.,* voice, video, text messaging, etc.). For example, telecommunications terminal *101-j* might be able to send and receive voice and video signals simultaneously.

Furthermore, telecommunications terminal *101-j* might enable a user to communicate while viewing or listening to other content (e.g., video, audio, text, etc.) that that is stored locally at the terminal or is received from another source. For example, a user of telecommunications terminal *101-j* might view a video during a voice call with another user, or might listen to music streamed from a remote server while participating in a text-based call (e.g., an instant messaging [IM] session, etc.).

### Summary of the Invention

In many situations, it would be advantageous if a telecommunications terminal user engaged in a call were to automatically receive content (e.g., video, audio, text, etc.) that is based on dialog of the call. For example, if two users are talking about cars during a voice call, a General Motors promotional video might be transmitted to one or both of the users' terminals and played during the call. Alternatively, one user might receive the General Motors promotional video and the other user might receive a banner advertisement for the National Public Radio program "Car Talk."

As another example, a telecommunications terminal user who is talking to a Dell Inc. representative about a problem with a hard disk drive might automatically receive a Portable Document Format (PDF) file with instructions on how to safely remove a hard drive from a computer cabinet, thereby facilitating diagnosis of the problem over the phone.

The present invention enables the delivery of relevant content to a telecommunications user engaged in a call. In particular, in the illustrative embodiment content is selected based on dialog of the call (e.g., speech during a voice call, text during an instant messaging session, etc.), and optionally, one or both of: (i) the state of the call (e.g., on-hold, transferring to another line, engaged in conversation, etc.), and (ii) the state of the conversation (e.g., greeting, main conversation, data entry [such as keying in a personal identification number], adjournment, etc.).

In addition, in the illustrative embodiment content that is delivered to a user might also be based on one or more of the following: the identity of the user; the identity of other users involved in the call; the telecommunications terminal employed by the user for the call; other telecommunications terminals involved in the call; the date and time; the location of the user; and the location of other users involved in the call. The following examples illustrate the utility of delivering content that is based on these additional factors:
- If two users are talking about baseball, the user in New York City might receive an advertisement for an upcoming Yankees game while the user in San Francisco might receive an advertisement for an upcoming Giants game.
- If two users are talking about food at 12:00pm Eastern Standard Time, the user in New York City might receive an advertisement for Ray's Pizza while the user in San Francisco might receive an advertisement for Joe's Pancake House.
- A user who mentions the phrase "credit card" during a conversation might receive an advertisement for American Express only if the user has an excellent credit rating.
- Two users who are talking about optics and who are both members of the Institute of Electrical and Electronics Engineers (IEEE) might both receive a 2-for-1 promotion for an upcoming IEEE conference on optical communications.
- A user of an AT&T Wireless telecommunications terminal might receive a Verizon Wireless advertisement for a special deal for new Verizon customers.
- Two users who are talking about exercise over terminals that both have a 212 area code might receive a 2-for-1 promotion for the New York Sports Club chain of gyms.

In the illustrative embodiment, a call analysis server monitors dialog of a call and applies one or both of speech recognition and natural language processing, as appropriate, to determine a topic of the conversation. Content that is related to this topic is then transmitted to one or more users engaged in the call such that the mode of communication of the content is *non-disruptive* to the user (i.e., the user is able to perceive and comprehend the content while simultaneously engaging in conversation). For example, a user engaged in a voice call might receive video content, but not audio content, while a user engaged in an instant messaging session might receive audio content, or perhaps even video content provided that his or her terminal has a sufficiently large display to render the content in a separate area.

The illustrative embodiment comprises: transmitting a signal to a user who is engaged in a call, wherein the signal is based on at least a portion of dialog of the call and wherein the signal is not part of the call.

### Brief Description of the Drawings

Figure 1 depicts telecommunications system 100 in the prior art.

Figure 2 depicts telecommunications system 200 in accordance with the illustrative embodiment of the present invention.

Figure 3 depicts a block diagram of the salient components of call analysis server 210, as shown in Figure 2, in accordance with the illustrative embodiment of the present invention.

Figure 4 depicts a flowchart of the salient tasks of call analysis server 210, in accordance with the illustrative embodiment of the present invention.

### Detailed Description

The terms appearing below are given the following definitions for use in this Description and the appended Claims.

For the purposes of the specification and claims, the term "**call**" is defined as an interactive communication involving one or more telecommunications terminal users. A call might be a traditional voice telephone call, an instant messaging (IM) session, a video conference, etc.

For the purposes of the specification and claims, a signal that is "non-disruptive" to a telecommunications user engaged in a call is defined as a signal that the user is able to perceive and comprehend while simultaneously engaging in conversation.

For the purposes of the specification and claims, the term **"calendrical time"** is defined as indicative of one or more of the following:
(i) a time (e.g., 16:23:58, etc.),
(ii) one or more temporal designations (e.g., Tuesday, November, etc.),
(iii) one or more events (e.g., Thanksgiving, John's birthday, etc.), and
(iv) a time span (e.g., 8:00PM to 9:00PM, etc.).

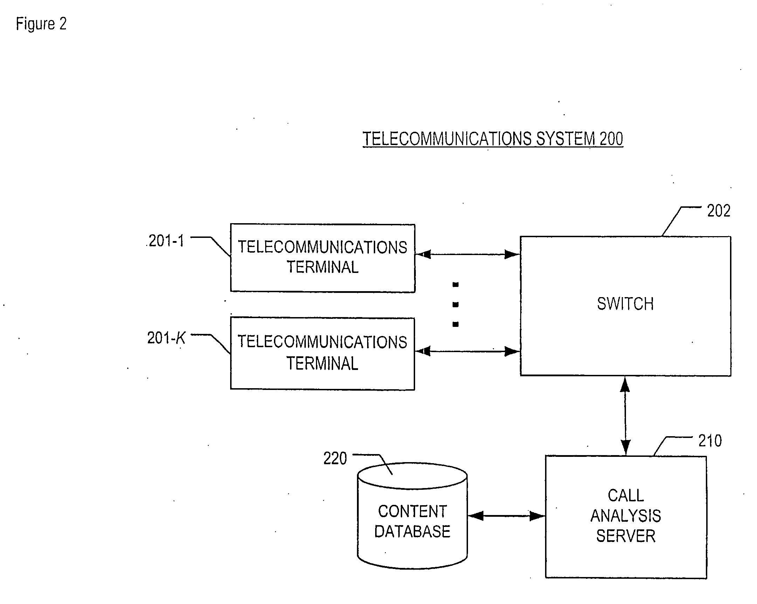

Figure 2 depicts telecommunications system 200 in accordance with the illustrative embodiment of the present invention. Telecommunications system 200 comprises telecommunications terminals 201-1 through 201-K, wherein K is a positive integer; switch 202; call analysis server 210; and content database 220, interconnected as shown.

Telecommunications terminals 201-*k*, for *k*=1 through K, communicate with each other via switch 202 in well-known fashion. Each telecommunications terminal 201-k is capable of placing calls to and receiving calls from one or more other terminals 201. In addition, each telecommunications terminal 201-k is capable of communicating via one or more modes of communication (*e.g.,* voice, video, text messaging, *etc.*)*,* either one-at-a-time or simultaneously (*e.g.,* voice and video from the same source simultaneously, voice from a first source and video from a second source simultaneously, etc.). It will be clear to those skilled in the art how to make and use terminal 201-k.

Switch 202 enables terminals 201-k, for *k*=1 through K, to communicate with each other by connecting (e.g., electrically, optically, etc.) a terminal to another terminal and by passing signals between the terminals in well-known fashion. Switch 202 is also capable of receiving signals from and transmitting signals to call analysis server 210, in well-known fashion. It will be clear to those skilled in the art how to make and use switch 202.

As will be appreciated by those skilled in the art, in some embodiments two or more telecommunications terminals might be connected via a plurality of switches. It will be clear to those skilled in the art how to make and use telecommunications system 200 with additional switches present.

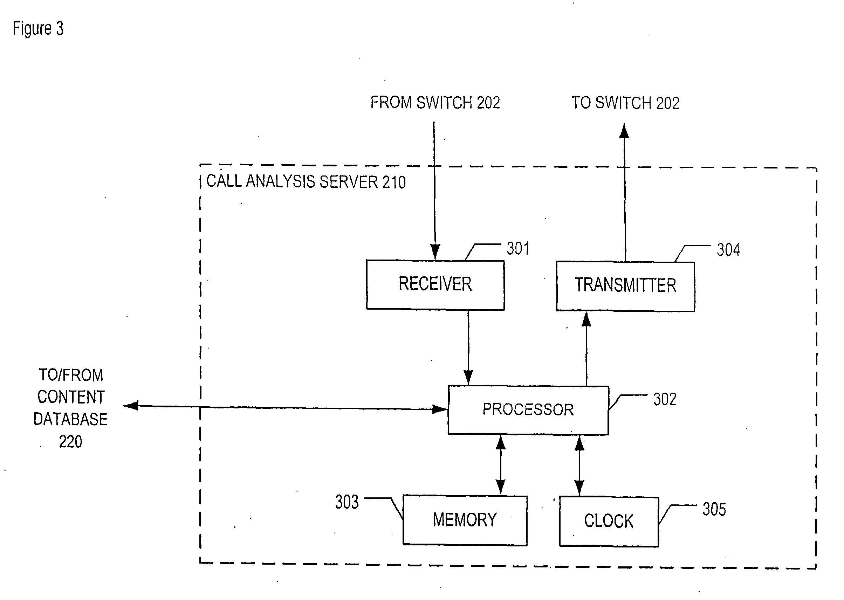

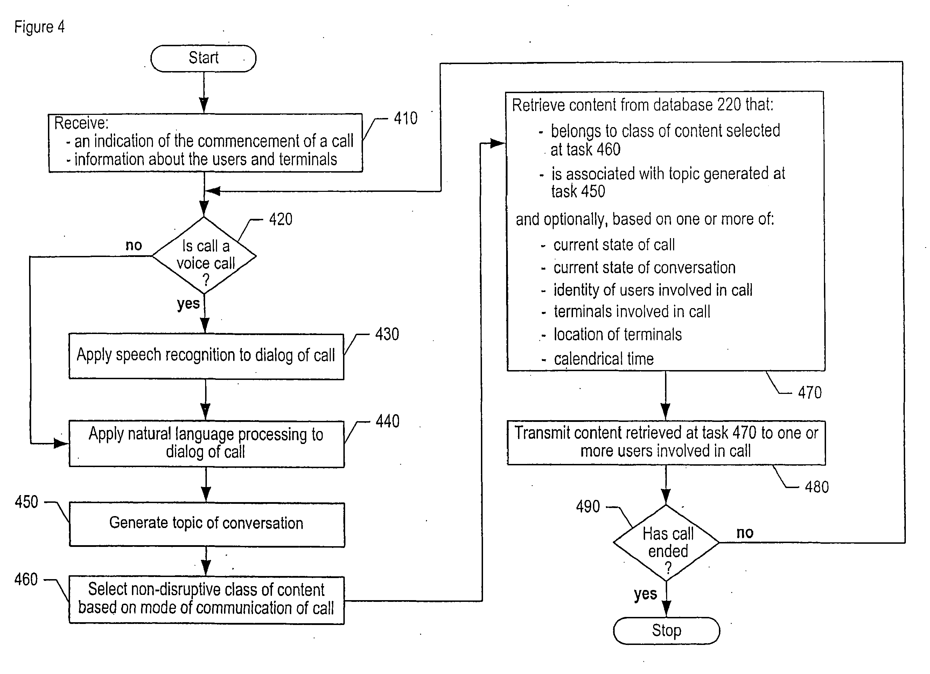

Call analysis server 210 monitors call dialog that flows through switch 202, retrieves content from content database 220 based on the dialog, and transmits the content to switch 202 for delivery to one or more telecommunications terminals that participate in the call described in detail below and with respect to Figures 3 and 4.

Content database 220 stores a plurality of multimedia content (e.g., video advertisements, instruction manuals, audio announcements, etc.), associates each unit of content with one or more keywords (or "topics"), and enables efficient retrieval of content based on topic and mode of communication. Content database 220 receives queries from call analysis server 210 and returns content to call analysis server 210 in well-known fashion. It will be clear to those skilled in the art how to build and use content database 220.

Figure 3 depicts a block diagram of the salient components of call analysis server 210, in accordance with the illustrative embodiment of the present invention. As shown in Figure 3, call analysis server 210 comprises receiver 301, processor 302, memory 303, transmitter 304, and clock 305, interconnected as shown.

Receiver 301 receives from switch 202:
(i) signals that indicate the state of a call (e.g., commencement of a call, termination of a call, transferring of a call, on-hold, etc.);
(ii) signals that convey information about the users and telecommunications terminals involved in a call; and
(iii) signals that comprise dialog of a call; and forwards the information encoded in the signals to processor 302, in well-known fashion. It will be clear to those skilled in the art, after reading this specification, how to make and use receiver 301.

Processor 302 is a general-purpose processor that is capable of receiving information from receiver 301, of executing instructions stored in memory 303, of reading data from and writing data into memory 303, of executing the tasks described below and with respect to Figure 4, and of transmitting information to transmitter 304. In some alternative embodiments of the present invention, processor 302 might be a special-purpose processor. In either case, it will be clear to those skilled in the art, after reading this specification, how to make and use processor 302.

Memory 303 stores data and executable instructions, as is well-known in the art, and might be any combination of random-access memory (RAM), flash memory, disk drive memory, etc. It will be clear to those skilled in the art, after reading this specification, how to make and use memory 303.

Transmitter 304 receives information from processor 302 and transmits signals that encode this information to terminal 201-k, in well-known fashion, via switch 202. It will be clear to those skilled in the art, after reading this specification, how to make and use transmitter 304.

Clock 305 transmits the current time, date, and day of the week to processor 302 in well-known fashion.

Figure 4 depicts a flowchart of the salient tasks of call analysis server 210, in accordance with the illustrative embodiment of the present invention. It will be clear to those skilled in the art which tasks depicted in Figure 4 can be performed simultaneously or in a different order than that depicted.

At task 410, call analysis server 210 receives (i) an indication of the commencement of a call from switch 202, and (ii) information about the users and telecommunications terminals involved in the call (e.g., identities of the users, locations of the terminals, phone numbers or Internet Protocol addresses of the terminals, modes of communication supported by the terminal, etc.), in well-known fashion.

At task 420, call analysis server 210 checks whether the call is a voice call or a non-voice call (e.g., text-based instant messaging session, etc.). If the call is a voice call, execution proceeds to task 430, otherwise execution continues at task 440.

At task 430, call analysis server 210 applies speech recognition to dialog of the call that is received via switch 202. A wide variety of methods of speech recognition are well-known to those skilled in the art.

At task 440, call analysis server 210 applies natural language processing to dialog of the call received from switched 202. For text-based calls, natural language processing is applied directly to the text of the call, while for voice-based calls, natural language processing is applied to the result of the speech recognition performed at task 430. A wide variety of methods of natural language processing are well-known to those skilled in the art, ranging from primitive techniques such as keyword counts to sophisticated semantic analysis.

At task 450, call analysis server 210 generates a topic of conversation based on the natural language processing of task 440. For example, the topic "car" might be generated based on (i) a keyword count that counts five occurrences of the word "car," or (ii) a semantic analysis of the illustrative dialog:
Joe: *"Did you see the blue Jaguar in the parking lot? I want one of those."*
Jim: *"I'd rather have a BMW 530."*
Joe: *"The 530 only has 220 horsepower, the Jag has a 300 horsepower V-8."*

At task 460, call analysis server 210 selects a class of content (e.g., video, audio, etc.) that will be non-disruptive to the mode of communication of the call, in well-known fashion.

At task 470, call analysis server 210 retrieves from content database 220 content that (i) belongs to the class of content selected at task 460, and (ii) is associated with the topic of conversation generated at task 450, in well-known fashion (e.g., via a query, etc.). In some embodiments, selection of content might also be based on at least one of:
- the current state of the call (e.g., on-hold, transferring to another line, engaged in conversation, etc.);
- the current state of the conversation (e.g., greeting, main conversation, data entry [such as keying in a personal identification number], adjournment, *etc.);*
- the identity of one or more users involved in the call;
- one or more telecommunications terminals involved in the call (e.g., phone number, Internet Protocol address, type of terminal, *etc.);*
- the locations of one or more of the terminals involved in the call; and
- the calendrical time at one or more of the terminals involved in the call.

At task 480, call analysis server 210 transmits the content retrieved at task 470 to one or more users involved in the call, in well-known fashion. As will be appreciated by those skilled in the art, determining which users should receive the content might be based on a variety of factors such as which user placed the call, the type of telecommunications terminal employed by the user, the available bandwidth for communicating with the telecommunications terminal, the degree to which a user contributed to the conversation, the degree to which a user talked about the generated topic during the conversation, etc.

At task 490, call analysis server 210 checks whether the call has ended. If so, the method of Figure 4 terminates; otherwise, execution goes back to task 420 for analyzing subsequent dialog and potentially delivering new content to one or more users involved in the call.

As will be appreciated by those skilled in the art, in some embodiments of the present invention one or more tasks of Figure 4 might be optional. For example, in some embodiments task 430 through 460 might not be performed, in which case the content delivered to a user might be based solely on one or more of: the current state of the call, the identity of one or more users involved in the call, one or more terminals involved in the call, the location of one or more terminals involved in the call, and calendrical time. It will be clear to those skilled in the art how to make and use such embodiments of the present invention.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, etc.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising transmitting a signal to a user who is engaged in a call, wherein said signal is based on at least a portion of dialog of said call and wherein said signal is not part of said call.

2. The method of claim 1 wherein the mode of communication represented by said signal is different than the mode of communication of said call.

3. The method of claim 1 wherein said signal is non-disruptive to said user.

4. The method of claim 1 wherein said call involves one or more telecommunications terminals, and wherein said signal is transmitted from an apparatus other than said telecommunications terminals.

5. The method of claim 1 wherein said signal is also based on the current state of said call.

6. The method of claim 1 wherein said call comprises a conversation, and wherein said signal is also based on the current state of said conversation.

7. The method of claim 1 wherein said call is between said user and one or more other users.

8. The method of claim 1 wherein said signal is also based on at least one of: the identity of said user, and the telecommunications terminal employed by said user for said call.

9. The method of claim 1 wherein said signal is also based on the location of the telecommunications terminal employed by said user for said call.

10. The method of claim 1 wherein said signal is also based on the calendrical time at the telecommunications terminal employed by said user for said call.

11. A method comprising transmitting a signal to a user who is engaged in a call, wherein said signal is based on at least a portion of dialog of said call and wherein the mode of communication represented by said signal is different than the mode of communication of said call.

12. The method of claim 10 wherein the mode of communication represented by said signal is video and the mode of communication of said call is voice.

13. The method of claim 10 wherein said signal is also based on the current state of said call.

14. The method of claim 10 wherein said call comprises a conversation, and wherein said signal is also based on the current state of said conversation.

15. A method comprising transmitting a signal to a user who is engaged in a call, wherein said signal is based on at least a portion of dialog of said call and wherein said signal is non-disruptive to said user.

16. The method of claim 15 wherein said signal is also based on the current state of said call.

17. The method of claim 15 wherein said call comprises a conversation, and wherein said signal is also based on the current state of said conversation.

18. A method comprising:
(a) receiving a first signal that comprises dialog of one or more users who are engaged in a call;
(b) generating a topic based on said dialog; and
(c) transmitting to at least one of said users a second signal that is based on said topic and that is not part of said call.

19. The method of claim 18 wherein generating said topic and transmitting said second signal occur during said call.

20. The method of claim 18 further comprising processing the contents of said first signal prior to generating said topic.

21. The method of claim 20 wherein said first signal represents speech, and wherein said processing comprises speech recognition.

22. The method of claim 20 wherein said processing comprises natural language processing.

23. The method of claim 18 wherein the mode of communication represented by said second signal is different than the mode of communication of said call.

24. The method of claim 18 wherein said second signal is non-disruptive to said user.

25. The method of claim 18 wherein said second signal is also based on the current state of said call.

26. The method of claim 18 wherein said call comprises a conversation, and wherein said second signal is also based on the current state of said conversation.

27. The method of claim 18 wherein said second signal is also based on the identity of at least one of said users.
